# EUROPÄISCHE PATENTANMELDUNG

(11) **EP 1 726 392 A1**
(43) Veröffentlichungstag der Anmeldung: **29.11.2006**
(21) Anmeldenummer: 05011111.1
(22) Anmeldetag: 23.05.2005
(51) Int. Cl.: B23D 61/02

(54) **Trennscheibe**

(71) Anmelder: Pentax S.R.L., 36063 Marostica (VI) (IT)
(72) Erfinder: Cestaro, Raffaello, 36063 Marostica (Vicenza) (IT)
(74) Vertreter: Schober, Christoph D.

(57) **Zusammenfassung**

Eine Trennscheibe umfasst einen Scheibenkörper (10) und einen Schneidkranz (20). Dabei weist der Scheibenkörper (10) eine mittige Spannöffnung (30) und einen äusseren Rand (11) auf. An dem äusseren Rand (11) ist der Schneidkranz (20) befestigt. Ferner weist der Scheibenkörper (10) mindestens zwei scheibenförmige Stammblätter (12,13) auf, die mit einer Vielzahl von Durchbrechungen (15) versehen sind und die im Bereich zwischen der Spannöffnung (30) und dem äusseren Rand (11) frei von einer stoffschlüssigen Verbindung zwischen den Stammblättern (12,13) übereinander angeordnet sind.

## Beschreibung

Die Erfindung betrifft eine Trennscheibe mit einem Scheibenkörper und einem Schneidkranz. Dabei weist der Scheibenkörper eine mittige Spannöffnung und einen äusseren Rand auf. An dem äusseren Rand ist der Schneidkranz befestigt. Zudem weist der Scheibenkörper mindestens zwei scheibenförmige Stammblätter auf, die mit einer Vielzahl von Durchbrechungen versehen sind.

Eine derartige Trennscheibe kommt bei rotierend angetriebenen Werkzeugen zum Trennen durch Schleifen von Naturstein (Granit, Marmor) und Kunststein (Beton) oder ähnlichen Materialien zum Einsatz. Dabei werden Trennscheiben in der Regel trocken, das heisst ohne Flüssigkeitskühlung, oder auch nass, also mit Flüssigkeitskühlung, betrieben.

Unter einem Stammblatt im Sinne der vorliegenden Erfindung ist ein scheibenförmiger, in der Regel aus Stahl bestehender, Körper zu verstehen, dessen äusserer Rand dazu vorgesehen ist, mit einem Schneidkranz zum Schleifen eines Werkstücks verbunden zu werden.

Beim Trennschleifen wird mechanische Energie nahezu vollständig in Wärmeenergie umgesetzt. Dies führt zur einer Erwärmung des Schneidkranzes, des Stammblattes und der Verbindungsstelle zwischen Schneidkranz und Stammblatt. Um eine lange Lebensdauer der Trennscheibe zu gewährleisten, muss diese Wärme abgeführt werden. Die Wärmeabfuhr erfolgt im wesentlichen durch eine Wärmeleitung vom Schleifbelag über den Schneidkranz in das Stammblatt und durch eine von der rotierenden Trennscheibe erzwungene Konvektion an die Umgebungsluft.

Während des Trennschleifvorganges treten ab bestimmten Drehzahlen auch starke Geräusche auf. Dies liegt insbesondere daran, dass die Trennscheibe im Drehbetrieb mit hohen Drehzahlen unvermeidlich zu Schwingungen angeregt wird. Diese so genannten Biegeschwingungen regen die umgebende Luft an und verursachen dadurch Druckschwankungen, die für die entstehenden Geräusche verantwortlich sind.

Der Stand der Technik kennt bereits einige Massnahmen, um eine Kühlung und eine verminderte Geräuschentwicklung zu erreichen. Beispielsweise ist aus der DE 42 43 480 A1 ein Trockensägeblatt bekannt, welches einen Grundkörper mit radialen Kühlschlitzen umfasst. Der Grundkörper besteht aus zwei oder mehreren aufeinander liegenden Scheiben. An einem äusseren Rand des Grundkörpers ist durch eine Schweissverbindung ein Schneidkranz gehalten. Darüber hinaus sind die Scheiben untereinander mittels Punktschweissen stellenweise fest miteinander verbunden.

Weiterhin beschreibt die EP 0 703 034 A1 einen Scheibenkörper mit mindestens zwei, vorzugsweise drei, Stammblättern. Der Scheibenkörper ist an seinem äusseren Rand mit einer abrasiven Schicht versehen. Die Stammblätter sind untereinander mittels Punktschweissen stellenweise fest miteinander verbunden. Bei einer Ausführungsform mit drei Stammblättern ist zwischen zwei Kontaktbereichen, in welchen die drei Stammblätter aufeinander liegen, eine sprungartige Änderung des Querschnittsverlaufes der beiden aussen liegenden Stammblätter vorgesehen, um so jeweils einen Hohlraum zwischen dem aussen liegenden Stammblatt und dem mittleren Stammblatt zu erzeugen. In diesem Bereich sind die drei Stammblätter jeweils mit einer Durchbrechung versehen, so dass die Hohlräume mit der Luft in der Umgebung des Scheibenkörpers in Kontakt stehen. Die Anordnung der Hohlräume und Durchbrechungen führt im Drehbetrieb zu einer verminderten Geräuschentwicklung und dient der Kühlung des Scheibenkörpers.

Allerdings hat es sich als nachteilig erwiesen, dass die zur Fixierung der Stammblätter untereinander vorgesehenen Punktschweissungen ein starres Aneinanderpressen der Stammblätter bewirken. Um die gewünschten Hohlräume zwischen den Stammblätter zu schaffen, ist deshalb eine aufwendige Formgebung der einzelnen Stammblätter zwischen den Schweisspunkten notwendig. Hinzu kommt, dass vor dem Punktschweissen in den Kontaktbereichen Kohlepulver auf die später aneinander gepressten Flächen der Stammblätter aufgebracht werden muss, um ein Anhaften der Stammblätter untereinander zu vermeiden. Diese Vorgehensweise gestaltet sich sehr aufwendig, da insbesondere eine Vielzahl von Punktschweissungen herzustellen ist und eine aufwendige Formgebung mit sprungartigen Änderungen des Querschnittsverlaufes der einzelnen Stammblätter notwendig ist.

Der Erfindung liegt die **Aufgabe** zugrunde, eine Trennscheibe zu schaffen, bei der sich bei einem einfachen Aufbau der Bestandteile und einer einfach gestalteten gegenseitigen Anordnung und Verbindung dieser Bestandteile eine effektive Geräuschdämpfung und Kühlung erzielen lässt.

Zur **Lösung** dieser Aufgabe ist in Übereinstimmung mit Anspruch 1 erfindungsgemäss vorgesehen, dass eine Trennscheibe einen Scheibenkörper und einen Schneidkranz umfasst. Dabei weist der Scheibenkörper eine mittige Spannöffnung und einen äusseren Rand auf. An dem äusseren Rand ist der Schneidkranz befestigt. Ferner weist der Scheibenkörper mindestens zwei scheibenförmige Stammblätter auf, die mit einer Vielzahl von Durchbrechungen versehen sind und die im Bereich zwischen der Spannöffnung und dem äusseren Rand frei von einer stoffschlüssigen Verbindung zwischen den Stammblättern übereinander angeordnet sind.

Die erfindungsgemässe Trennscheibe beruht auf der Erkenntnis, dass über einen geeigneten Aufbau des Scheibenkörpers aus mehreren Stammblättern unter Berücksichtigung der gegenseitigen Anordnung der Stammblätter und deren Befestigung im Drehbetrieb ein Effekt erzielt werden kann, der eine zuverlässige Wärmeabfuhr und gleichzeitig eine Verminderung der Geräuschentwicklung ermöglicht.

Mit der Erfindung wird eine Trennscheibe geschaffen, bei der die Stammblätter an keiner Stelle fest direkt miteinander verbunden sind. Die Stammblätter sind lediglich mit dem Schneidkranz stoffschlüssig verbunden und werden durch diesen gehalten. Hinsichtlich der restlichen Einbindung der Stammblätter in den Trennscheibenkörper sind die Stammblätter frei von weiteren stoffschlüssigen Verbindungen.

Erfindungsgemäss werden die Stammblätter übereinander angeordnet. Unter dieser Definition ist sowohl eine beabstandete als auch eine direkt aufeinander liegende Anordnung zu verstehen. Mit anderen Worten sind die Stammblätter benachbart zueinander angeordnet.

Für den Fall, dass die Stammblätter eben ausgebildet sind und vollflächig aufeinander liegen, bewirkt die erfindungsgemässe Ausgestaltung, dass sich die Stammblätter im Drehbetrieb der Trennscheibe infolge der unvermeidlich auftretenden Biegeschwingungen nach aussen wölben. Dadurch entsteht mindestens ein Hohlraum, der aufgrund der in den Stammblättern vorhandenen Durchbrechungen von der im Drehbetrieb entstehenden Lüftströmung durchströmt wird. Bei einem bereits vorab durch eine Formgebung der Stammblätter ausgebildeten Hohlraum zwischen den Stammblättern tritt ebenfalls eine derartige Luftströmung ein. Dabei kann sich der Hohlraum gegebenenfalls aufgrund der nach aussen gerichteten Wölbung im Drehbetrieb vergrössern. Der Hohlraum kann also durch eine entsprechende Formgebung der Stammblätter im Vorhinein vorgegeben werden und sich im Drehbetrieb gegebenenfalls noch erweitern oder sich erst im Drehbetrieb durch ein Wölben der Stammblätter nach aussen ergeben. Bei Ausbildung eines einzigen Hohlraumes sind bevorzugt alle Durchbrechungen im Bereich dieses Hohlraums so angeordnet, dass eine Luftströmung von allen Durchbrechungen zu und aus dem Hohlraum möglich ist. Die Durchbrechungen sind in den Stammblättern vorzugsweise an den gleichen Stellen angeordnet, so dass in dem Scheibenkörper jeweils ein durchgehendes Loch gebildet ist. Bei einer Gestaltung mit mehreren Hohlräumen können sich die Durchbrechungen auf die verschiedenen Hohlräume aufteilen.

Vorzugsweise werden zwei Stammblätter mit gleichem Durchmesser verwendet. Insbesondere bei grösseren Durchmessern der Trennscheibe kommen mehr als zwei Stammblätter zum Einsatz. Dabei wird aufgrund der Anordnung einer Vielzahl von Stammblättern eine gute Wärmeabfuhr erzielt, da sich der von dem Schneidkranz ausgehende Wärmefluss auf mehrere Stammblätter verteilt, die dann jeweils über die Hohlräume und Durchbrechungen zuverlässig abgekühlt werden können.

Die erfindungsgemässe Trennscheibe ermöglicht es somit, die beim Drehbetrieb der Trennscheibe zwangsweise auftretenden Biegeschwingungen für die Wärmeabfuhr und zur Verringerung des entstehenden Lärms zu nutzen.

Darüber hinaus wird aufgrund der Formgebung beziehungsweise infolge des Biegeverhaltens der Stammblätter im Drehbetrieb auch eine Verbesserung des Stabilitätsverhaltens bewirkt. Der Grund hierfür ist ein erhöhtes Trägheitsmoment infolge der Ausbauchung der Stammblätter nach aussen.

Die erfindungsgemässe Trennscheibe kann sowohl trocken als auch nass betrieben werden. Die sich im Drehbetrieb ergebenden und/oder die aufgrund der Formgebung der Stammblätter bereits im Ruhezustand vorhandenen Hohlräume zwischen den Stammblättern eignen sich für die Zirkulation von sowohl Luft als auch einer Kühlflüssigkeit, wie beispielsweise Wasser. Zur einfacheren Veranschaulichung wird im Folgenden von einem trockenen Betrieb ausgegangen, wobei die vorgeschlagenen Ausgestaltungen auch für einen Betrieb mit Kühlflüssigkeit eingesetzt werden können.

Vorteilhafte Ausgestaltungen der erfindungsgemässen Trennscheibe sind in den Ansprüchen 2 bis 15 beschrieben.

Eine bevorzugte Ausführungsform besteht darin, dass die Stammblätter zumindest abschnittsweise beabstandet zueinander angeordnet sind. Der Abschnitt mit der Beabstandung kann grundsätzlich an jeder beliebigen Stelle im Bereich zwischen der Spannöffnung und dem äusseren Rand des Scheibenkörpers vorgesehen sein. Im Grundriss der Trennscheibe betrachtet kann ein solcher Bereich beispielsweise ringartig ausgebildet und konzentrisch um die Drehachse der Trennscheibe vorgesehen werden. Es können natürlich auch mehrere derartige Bereiche vorhanden sein. Zur Vermeidung von Unwuchten ist eine rotationssymmetrische Anordnung vorteilhaft.

Um eine Lüftung bis an den innen liegenden Rand des Schneidkranzes zu erreichen, ist es von Vorteil, wenn die Stammblätter über den gesamten Querschnitt des Scheibenkörpers beabstandet zueinander angeordnet sind.

Bei einer weiteren bevorzugten Ausführungsform weisen die Stammblätter einen zumindest abschnittsweise kurvenförmig geformten Querschnitt auf. Dabei sind die Stammblätter bevorzugt nach aussen gewölbt. So kann sich einer im Drehbetrieb zusätzlich ergebenden Biegung der Stammblätter die gewünschte Richtung nach aussen aufgezwungen werden und dadurch der Hohlraum zwischen den Stammblättern vergrössert werden. Bei einer Ausgestaltung mit mehr als zwei Stammblättern sind wenigstens die aussen liegenden Stammblätter gewölbt geformt.

Zweckmässigerweise ist der äussere Rand mittels einer stoffschlüssigen Verbindung, vorzugsweise mittels Laserschweissen, an dem Schneidkranz befestigt. Alternativ können auch andere Arten von Schweissverbindungen und und andere Befestigungsmöglichkeiten, wie beispielsweise Löten, zur Anwendung kommen.

Um auch in dem äusseren Randbereich des Scheibenkörpers einen verbesserten Kühl- und Dämpfungseffekt hervorzurufen, weisen die Stammblätter jeweils eine äussere Stirnfläche auf, die stoffschlüssig an dem Schneidkranz befestigt ist. So kann die beim Drehbetrieb entstehende, radial nach aussen strömende, Luft bis in den Randbereich des Scheibenkörpers gelangen.

Bevorzugt weist der Schneidkranz mindestens ein Schneidsegment auf. Die Aufteilung des Schneidkranzes in Schneidsegmente bringt ebenfalls einen Kühleffekt mit sich, da die Stirnflächen der Schneidsegmente im Drehbetrieb der Luftströmung ausgesetzt sind.

In einer bevorzugten Ausführungsform weist das Schneidsegment eine grössere Dicke als der Scheibenkörper auf. Dadurch wird vermieden, dass die in Richtung der Schnittflächen des Werkstücks gerichteten Aussenflächen der Stammblätter nicht mit den Schnittflächen in Berührung kommen. Andernfalls würde es infolge der auftretenden Reibung zu einer Verminderung der Drehgeschwindigkeit der Trennscheibe kommen. Die Ausbildung, die gegenseitige Anordnung und die Befestigung der Stammblätter ist daher auf die Dicke des Schneidkranzes abzustimmen, wobei auch die beim Drehbetrieb auftretenden Biegungen zu berücksichtigen sind.

Vorteilhafterweise ist das Schneidsegment mit Titan beschichtet. Die Titanbeschichtung gewährleistet eine verhältnismässig lange Lebensdauer der Schneidsegmente.
Zudem ist es zweckmässig, wenn das Schneidsegment mit Diamantpartikeln besetzt ist. Die Grösse der Diamantpartikel und die Festigkeit ihrer Einbettung bestimmt grösstenteils die Schneidleistung und Lebensdauer der Trennscheibe.

Von Vorteil ist es ferner, wenn das Schneidsegment einen äusseren Rand, einen inneren Rand und mindestens einen Einschnitt aufweist, wobei der Einschnitt vom äusseren Rand in Richtung auf den inneren Rand verläuft. Die Einschnitte können mit unterschiedlichen Formen ausgebildet werden. Bevorzugt sind drei Einschnitte vorgesehen, wobei der mittlere Einschnitt eine grössere Tiefe als die beiden aussen liegenden Einschnitte aufweist. Durch die Ausgestaltung der Schneidsegmente mit Einschnitten wird ein gleichmässigerer Verbrauch der Schneidsegmente ermöglicht. Der Einschnitt ist vorzugsweise V-förmig ausgebildet.

Zur Vermeidung von Rissen aufgrund von Spannungsspitzen, insbesondere bei der Aufteilung des Schneidkranzes in Schneidsegmente, weist der Scheibenkörper und/oder der Schneidkranz eine Vielzahl von Hinterlochungen auf, die vorzugsweise im Übergangsbereich zwischen zwei Schneidsegmenten angeordnet sind.

Bei einer weiteren bevorzugten Ausführungsform wird vorgeschlagen, dass die Durchbrechungen zickzackförmig angeordnet sind und abschnittsweise Linien bilden. Vorzugsweise stehen die Linien in einem Winkel von etwa 40° bis 60° zueinander. Vorteilhafterweise sind die Durchbrechungen im äusseren Randbereich des Scheibenkörpers vorgesehen, da dort der grösste Kühlbedarf besteht. Die Durchbrechungen können beispielsweise kreisförmig, ringförmig, rechteckförmig, ellipsenförmig oder in Form von länglichen Schlitzen ausgebildet sein. Die Anordnung der Durchbrechungen führt weiterhin zu Durchblickmöglichkeiten für den Bediener der Trennschleifvorrichtung. So kann eine zuverlässige Überwachung der Trennschleifvorganges erreicht werden.

Nachfolgend wird die Erfindung unter Bezugnahme auf die Zeichnungen weiter erläutert. Dabei zeigen schematisch:
- Fig. 1: eine Draufsicht auf eine erste Ausführungsform einer erfindungsgemässen Trennscheibe;
- Fig. 2: eine vergrösserte Darstellung eines Segments der Trennscheibe gemäss Fig. 1;
- Fig. 3: einen Querschnitt gemäss der Linie III-III durch die Trennscheibe gemäss Fig. 1;
- Fig. 4: eine vergrösserte Darstellung des in Fig. 3 mit IV gekennzeichneten Bereichs;
- Fig. 5: einen Querschnitt durch eine zweite Ausführungsform der Trennscheibe;
- Fig. 6: eine vergrösserte Darstellung des in Fig. 5 mit VI gekennzeichneten Bereichs;
- Fig. 7: einen Querschnitt durch die zweite Ausführungsform gemäss Fig. 5 nach Montage der Trennscheibe an einem Werkzeug;
- Fig. 8: eine vergrösserte Darstellung entsprechend Fig. 6 für eine dritte Ausführungsform der Trennscheibe.

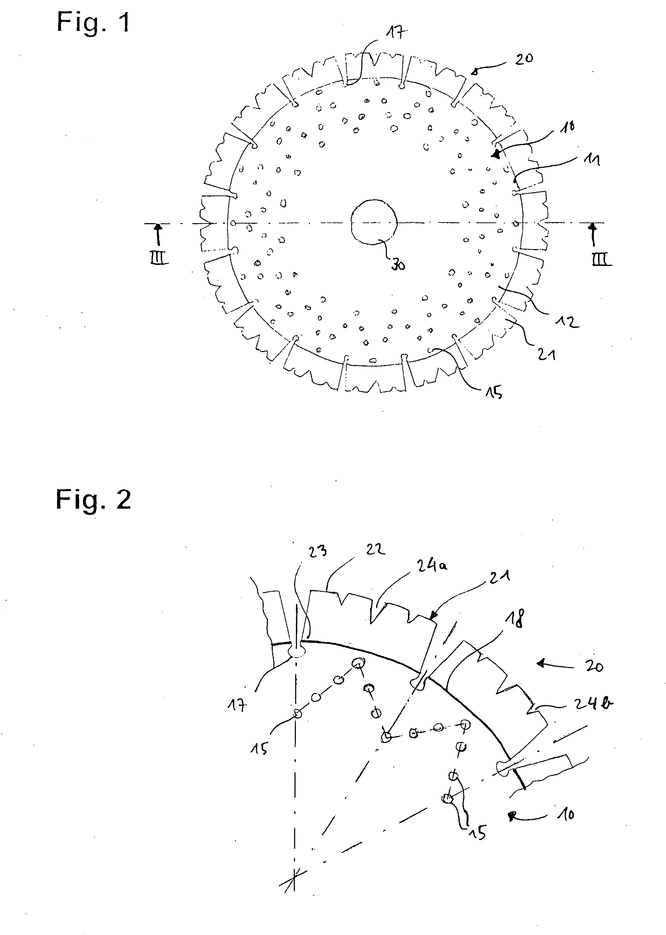

Die Fig. 1 bis 4 zeigen eine erste Ausführungsform einer erfindungsgemässen Trennscheibe mit einem Scheibenkörper 10 und mit einem Schneidkranz 20.

Der Scheibenkörper 10 weist ein erstes kreisförmiges Stammblatt 12 und ein zweites kreisförmiges Stammblatt 13 auf, wobei die beiden Stammblätter 12, 13 den gleichen Durchmesser haben, im wesentlichen parallel zueinander ausgerichtet sind und über den gesamten Querschnitt des Scheibenkörpers 10 vollflächig aufeinander liegen. Beide Stammblätter 12, 13 sind in der Mitte jeweils mit einer kreisförmigen Spannöffnung 30 zur Montage der Trennscheibe an einem Werkzeug versehen. Durch die Mittelpunkte der Spannöffnungen 30 verläuft eine Drehachse 31 der Trennscheibe.

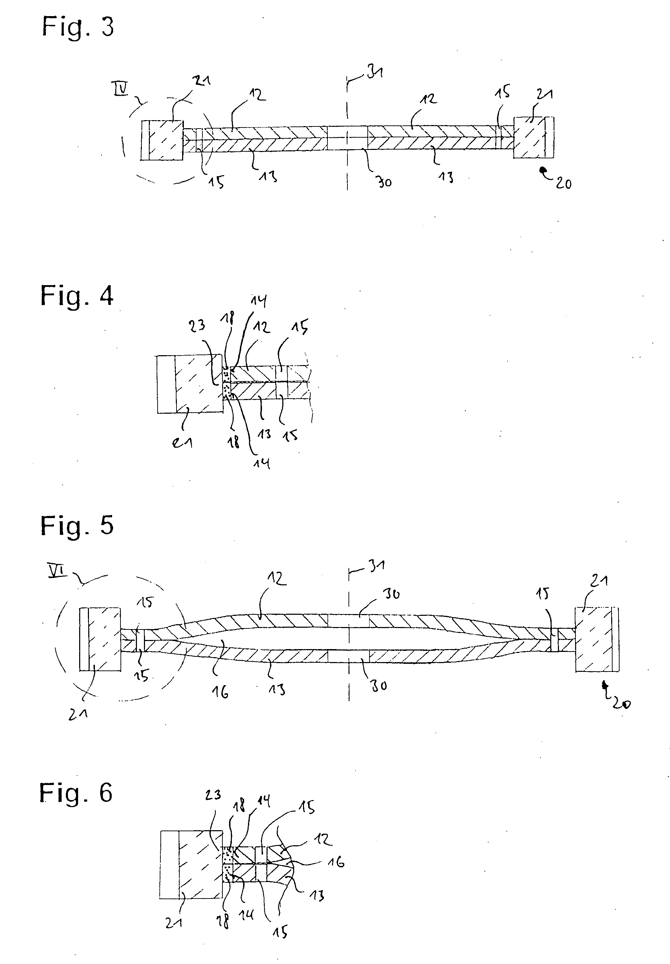

Der Schneidkranz 20 umfasst 16 Schneidsegmente 21, die einen aus Stahl bestehenden Kern aufweisen, der mit Titan beschichtet ist. In die Schneidsegmente sind Diamantpartikel eingebettet, die den abrasiven Abtrag der Trennscheibe unterstützen. Wie die Fig. 3 und 4 zeigen, haben die Schneidsegmente 21 einen rechteckigen Querschnitt. Des Weiteren, wie aus einer Zusammenschau der Fig. 1 und 2 ersichtlich, sind die Schneidsegmente 21 jeweils mit drei V-förmigen Einschnitten 24a, 24b versehen, welche von einem äusseren Rand 22 in Richtung auf einen inneren Rand 23 des Schneidsegments 21 spitz zulaufen. Dabei hat der mittlere Einschnitt 24a eine grössere Tiefe als die beiden benachbarten Einschnitte 24b. Die Einschnitte 24a, 24b tragen unter anderem zu einer Kühlung der Schneidsegmente 21 bei.

Ein äusserer Rand 11 des Scheibenkörpers 10 ist dadurch mit dem Schneidkranz 20 verbunden, dass die Stammblätter 12, 13 im Bereich jedes Schneidsegments 21 jeweils über eine mittels Laserschweissen hergestellte Schweissnaht 18 an den Schneidsegmenten 21 befestigt sind. Dabei ist in Umfangsrichtung des Scheibenkörpers 10 jeweils ein Abschnitt einer Stirnfläche 14 des Stammblattes 12, 13 mit dem inneren Rand 23 eines jeden Schneidsegments 21 verschweisst. Infolge dieser Schweissverbindung werden die Stammblätter 12, 13 durch den Schneidkranz 20 gehalten. Ausser dieser stoffschlüssigen Befestigung der Stammblätter 12, 13 über die Stirnflächen 14 an dem inneren Rand 23 der Schneidsegmente 21 existiert keine weitere stoffschlüssige Verbindung der Stammblätter 12, 13 zu anderen Bestandteilen der Trennscheibe. Insbesondere besteht im Bereich zwischen der Spannöffnung 30 und dem äusseren Rand 11 des Scheibenkörpers 10 keine direkte Befestigung der Stammblätter 12, 13 untereinander.

Des weiteren weisen die beiden Stammblätter 12, 13 zwischen benachbarten Schneidsegmenten 21 jeweils eine zum äusseren Rand 11 hin offene Hinterlochung 17 auf. Diese verläuft entlang einer Achse (in Fig. 2 strichpunktiert dargestellt) vom äusseren Rand 11 nach innen in Richtung auf die Spannöffnung 30 und geht in eine Kreisform über. Die Hinterlochungen 17 verhindern das Auftreten von Spannungsrissen.

Wie weiterhin aus Fig. 1 und 2 zu erkennen, weisen die Stammblätter 12, 13 ferner eine Vielzahl von Durchbrechungen 15 auf, welche in einem zickzackförmigen Muster unter Bildung von abschnittsweisen geraden Linien verteilt sind. Die Durchbrechungen 15 im äussersten Randbereich der Stammblätter 12, 13 liegen etwa mittig zwischen den Hinterlochungen 17. Entsprechend Fig. 2 sind die weiter innen liegenden Durchbrechungen 15 so verteilt, dass jeweils zwischen zwei aussen liegenden Durchbrechungen 15 ein V entsteht, wodurch sich bei einer Gesamtbetrachtung des Scheibenkörpers 10 in der Draufsicht (siehe Fig. 1) ein Zickzack-Muster ergibt. Dabei stehen die gestrichelt angedeuteten Linien in einem Winkel von etwa 30° bis 60° zueinander. Die Schnittpunkte der Linien im Bereich des Innenrandes des Musters liegen jeweils auf der gedachten Symmetrieachse der nächstliegenden Hinterlochung 17.

Die lediglich im Bereich der Stirnflächen 14 des ersten beziehungsweise zweiten Stammblattes 12, 13 vorhandenen Schweissverbindungen 18 (siehe Fig. 3 und 4) ermöglichen, dass die im Drehbetrieb auftretenden Biegeschwingungen die Stammblätter 12, 13 nach aussen biegen. Der entstehende Hohlraum kann so über die Durchbrechungen 15 "belüftet" werden. Dies führt zu einer Kühlung der Stammblätter 12, 13. Daneben bewirkt der Luftaustausch über die Durchbrechungen 15 und den Hohlraum auch eine Reduzierung der Geräuschentwicklung, da sich die auf beiden Seiten der schwingenden Trennscheibe vorhandenen Luftdruckschwankungen zumindest teilweise ausgleichen können. So wird eine Dämpfung der Schwingung der Trennscheibe und damit eine Reduzierung des abgestrahlten Schallpegels bewirkt.

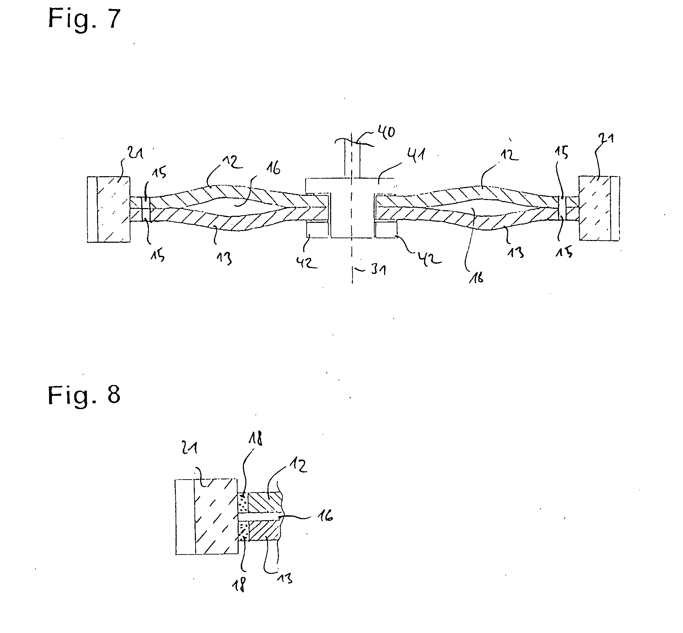

Die in den Fig. 5 bis 7 gezeigte zweite Ausführungsform unterscheidet sich von der ersten Ausführungsform dadurch, dass die beiden Stammblätter 12, 13 abschnittsweise eine nach aussen gewölbte Form aufweisen. Dadurch wird bereits in der Ruhestellung der Trennscheibe ein Hohlraum 16 gebildet (siehe Fig. 5). Fig. 7 zeigt die Trennscheibe nach der Montage an einem Werkzeug mit einer um die Drehachse 31 rotierbaren Welle 40. Zur Befestigung der Trennscheibe an der Welle 40 ist eine an der Welle 40 angeordnete Nabe 41 und ein ringförmiges Spannelement 42 vorgesehen. Dabei weist die Nabe 41 und das Spannelement 42 ein Gewinde auf. Nach Einführen der Nabe 41 in die Spannöffnung 30 der Trennscheibe wird diese mit dem Spannelement 42 an der Welle 40 fixiert. Dadurch werden die Stammblätter 12, 13 in einem mittleren Bereich um die Spannöffnung 30 herum gegeneinander gedrückt. Der ringförmig um die Drehachse 31 verteilte Hohlraum 16 hat nun einen ellipsenförmigen Querschnitt. Im äusseren Randbereich des Scheibenkörpers 10 liegen die Stammblätter 12, 13 aufeinander auf. Im Bereich der grössten Erhebung der Stammblätter 12, 13 hat der Scheibenkörper 10 eine kleinere Dicke als der Schneidkranz 20 beziehungsweise als die Schneidsegmente 21.

Durch den nach Einbau der Trennscheibe in das Werkzeug geschaffenen Hohlraum 16 und die grösstenteils im Bereich des Hohlraumes 16 in den Stammblättern 12, 13 vorgesehenen Durchbrechungen 15 wird ermöglicht, dass ein Austausch der in dem Hohlraum 16 vorhandenen Luft mit der ausserhalb der Stammblätter 12, 13 vorhandenen Luft stattfinden kann. Zudem kann sich der vorgegebene Hohlraum 16 im Drehbetrieb der Trennscheibe infolge der ab einer bestimmten Drehzahl auftretenden Biegeschwingungen noch vergrössern.

Schliesslich zeigt der in Fig. 8 dargestellte Ausschnitt eine auf der zweiten Ausführungsform (Fig. 5 bis 7) aufbauende dritte Ausführungsform der erfindungsgemässen Trennscheibe. Ein Unterschied zur zweiten Ausführungsform besteht darin, dass die in Fig. 5 gezeigten Stammblätter 12, 13 im äusseren Randbereich des Scheibenkörpers 10 beabstandet zueinander angeordnet sind. So wird ein grösserer Hohlraum 16 geschaffen, der bis an den inneren Rand 23 des Schneidkranzes 20 reicht, wodurch eine bessere Kühlung dieses Bereiches erzielt werden kann.

Die beschriebenen Ausführungsformen zeichnen sich insbesondere durch eine einfache Zusammensetzung mit wenigen Schweissverbindungen und einer zuverlässigen Kühlung der Schneidsegmente 21 und Stammblätter 12, 13 und durch eine Lärmreduzierung aus.

Die bei herkömmlichen Trennscheiben vorhandenen Schweissverbindungen zwischen den Stammblättern erschweren hingegen die Schaffung der Hohlräume und wirken dem mit der erfindungsgemässen Trennscheibe erzielten Effekt entgegen. Zudem erfordern Punktschweissungen zwischen den Stammblättern zusätzlichen Aufwand bei der Herstellung und führen somit zu höheren Kosten.

### Bezugszeichenliste

- 10: Scheibenkörper
- 11: äusserer Rand
- 12: erstes Stammblatt
- 13: zweites Stammblatt
- 14: Stirnfläche
- 15: Durchbrechung
- 16: Hohlraum
- 17: Hinterlochung
- 18: Schweissnaht
- 20: Schneidkranz
- 21: Schneidsegment
- 22: äusserer Rand
- 23: innerer Rand
- 24a: Einschnitt
- 24b: Einschnitt
- 30: Spannöffnung
- 31: Drehachse
- 40: Welle
- 41: Nabe
- 42: Spannelement

## Patentansprüche

1. Trennscheibe mit einem Scheibenkörper (10) und einem Schneidkranz (20), wobei der Scheibenkörper (10) eine mittige Spannöffnung (30) und einen äusseren Rand (11) aufweist, wobei der Schneidkranz (20) an dem äusseren Rand (11) befestigt ist und wobei der Scheibenkörper (10) mindestens zwei scheibenförmige Stammblätter (12, 13) aufweist, die mit einer Vielzahl von Durchbrechungen (15) versehen sind und die im Bereich zwischen der Spannöffnung (30) und dem äusseren Rand (11) frei von einer stoffschlüssigen Verbindung zwischen den Stammblättern (12, 13) übereinander angeordnet sind.

2. Trennscheibe nach Anspruch 1, **dadurch gekennzeichnet, dass** die Stammblätter (12, 13) zumindest abschnittsweise beabstandet zueinander angeordnet sind.

3. Trennscheibe nach Anspruch 2, **dadurch gekennzeichnet, dass** die Stammblätter (12, 13) über den gesamten Querschnitt des Scheibenkörpers (10) beabstandet zueinander angeordnet sind.

4. Trennscheibe nach einem der Ansprüche 1 bis 3, **dadurch gekennzeichnet, dass** die Stammblätter (12, 13) einen zumindest abschnittsweise kurvenförmig geformten Querschnitt aufweisen.

5. Trennscheibe nach einem der Ansprüche 1 bis 4, **dadurch gekennzeichnet, dass** der Schneidkranz (20) mittels einer stoffschlüssigen Verbindung (18), vorzugsweise mittels Laserschweissen, an dem äusseren Rand (11) befestigt ist.

6. Trennscheibe nach Anspruch 5, **dadurch gekennzeichnet, dass** die Stammblätter (12, 13) jeweils eine äussere Stirnfläche (14) aufweisen, die stoffschlüssig an dem Schneidkranz (20) befestigt ist.

7. Trennscheibe nach einem der Ansprüche 1 bis 6, **dadurch gekennzeichnet, dass** der Schneidkranz (20) mindestens ein Schneidsegment (21) aufweist.

8. Trennscheibe nach Anspruch 7, **dadurch gekennzeichnet, dass** das Schneidsegment (21) eine grössere Dicke als der Scheibenkörper (10) aufweist.

9. Trennscheibe nach Anspruch 7 oder 8, **dadurch gekennzeichnet, dass** das Schneidsegment (21) mit Titan beschichtet ist.

10. Trennscheibe nach einem der Ansprüche 7 bis 9, **dadurch gekennzeichnet, dass** das Schneidsegment (21) mit Diamantpartikeln besetzt ist.

11. Trennscheibe nach einem der Ansprüche 7 bis 10, **dadurch gekennzeichnet, dass** das Schneidsegment (21) einen äusseren Rand (22), einen inneren Rand (23) und mindestens einen Einschnitt (24a, 24b) aufweist, wobei der Einschnitt (24a, 24b) vom äusseren Rand (22) in Richtung auf den inneren Rand (23) verläuft.

12. Trennscheibe nach Anspruch 11, **gekennzeichnet durch** drei Einschnitte (24a, 24b), wobei ein mittlerer Einschnitt (24a) eine grössere Tiefe als zwei aussen liegende Einschnitte (24b) aufweist.

13. Trennscheibe nach Anspruch 11 oder 12, **dadurch gekennzeichnet, dass** der Einschnitt (24a, 24b) V-förmig ausgebildet ist.

14. Trennscheibe nach einem der Ansprüche 1 bis 13, **dadurch gekennzeichnet, dass** der Scheibenkörper (10) oder der Schneidkranz (20) eine Vielzahl von Hinterlochungen (17) aufweist.

15. Trennscheibe nach einem der Ansprüche 1 bis 14, **dadurch gekennzeichnet, dass** die Durchbrechungen (15) zickzackförmig angeordnet sind und abschnittsweise Linien bilden.
